# EUROPEAN PATENT APPLICATION

(11) **EP 4 365 478 A1**
(43) Date of publication of application: **08.05.2024**
(21) Application number: 22833278.9
(22) Date of filing: 30.06.2022
(51) Int. Cl.: F17C 13/02, F17C 13/08, H02J 7/00

(54) **GAS STORAGE CONTAINER, RACK, AND GAS STORAGE SYSTEM**

(30) Priority: 30.06.2021 JP 2021108444
(71) Applicant: Atomis Inc., Kobe-shi, Hyogo 650-0047 (JP)
(72) Inventor: ASARI Daisuke, Kyoto-shi Kyoto 602-0841 (JP)
(74) Representative: AOMB Polska Sp. z.o.o.
(86) International application number: PCT/JP2022/026224
(87) International publication number: WO 2023/277132

(57) **Abstract**

Provided is a configuration in which the user can supply power to the gas remaining amount measurement module in the gas storage container at their own place. A gas storage container according to the present invention includes: a casing with a flat upper surface and a flat lower surface and is vertically stackable; a gas container installed in the casing; and a gas remaining amount measurement module including a power receiving member for a contactless power supply. The pedestal according to the present invention includes: a bottom portion for resting the gas storage container, the bottom portion being configured to contact the lower surface of the casing; and a side portion for supporting the gas storage container, the side portion including at least one power supplying portion with a power supplying member corresponding to the power receiving member.

## Description

### TECHNICAL FIELD

The present disclosure relates to a gas storage container capable of contactless power supply. The present disclosure also relates to a pedestal for contactless power supply to the gas storage container. Further, the present disclosure relates to a gas storage system comprising the gas storage container and the pedestal.

### BACKGROUND ART

Gas cylinders having a large weight and a bottle shape have been generally used. However, such gas cylinders are not easy to handle as they have large occupied volume and are difficult to transport and install. Also, such gas cylinders are not meant to have aesthetic appearances.

Therefore, with the aim of providing a gas storage container that is easy to transport and install, the Applicant has reported a gas storage container that has flat upper and lower surfaces and is vertically stackable (Patent Document 1). As one variation, this document discloses a gas storage container including a casing with a flat upper surface and a flat lower surface and is vertically stackable, and a gas container installed in the casing (claim 9). Further, this document also discloses a configuration further including a gas remaining amount measurement module (claim 10).

### Citation List

### Patent Literature

[Patent Document 1] WO2019/026872

### SUMMARY OF THE INVENTION

### Technical Problem

However, the present inventor has found that in the above configuration, the power consumption of the gas remaining amount measurement module is relatively large, and its lifespan is thereby limited. The electrical life of the gas remaining amount measurement module is usually shorter than the physical life of the gas container and the casing. Further, the electrical life of the gas remaining amount measurement module could be exhausted while the gas still remains in the gas container. Therefore, in the previous configuration, when the electrical life of the gas remaining amount measurement module is exhausted, it is necessary for the administrator to retrieve the gas storage container from the user and charge or replace the gas remaining amount measurement module, regardless of the condition of the gas container and the casing or the amount of gas still remaining.

Therefore, it is an object of the present invention to provide a configuration in which the user can supply power to the gas remaining amount measurement module in the gas storage container at their own place.

### Solution to Problem

According to an exemplary embodiment of the present invention, a gas storage container, a pedestal, and a gas storage system are provided as below.

[1] A gas storage container, comprising: a casing with a flat upper surface and a flat lower surface and is vertically stackable; a gas container installed in the casing; and a gas remaining amount measurement module comprising a power receiving member for a contactless power supply.
[2] The gas storage container according to [1], wherein at least a part of the gas remaining amount measurement module is installed in a space between the casing and the gas container.
[3] The gas storage container according to [1] or [2], wherein the gas remaining amount measurement module comprises at least one sensor selected from the group consisting of a pressure sensor, a liquid level sensor, a temperature sensor, and a gyro sensor.
[4] The gas storage container according to any one of [1] to [3], wherein the gas remaining amount measurement module is configured to perform wireless communication.
[5] The gas storage container according to any one of [1] to [4], wherein the gas remaining amount measurement module is configured to perform GPS communication.
[6] The gas storage container according to any one of [1] to [5], wherein the gas remaining amount measurement module further comprises a battery chargeable by the contactless power supply.
[7] The gas storage container according to any one of [1] to [6], wherein the casing has a plurality of side surfaces and further comprises a first grip on an outer edge between the upper surface and at least one of the side surfaces.
[8] The gas storage container according to any one of [1] to [7], wherein the casing has a plurality of side surfaces and further comprises a second grip on an outer edge between the lower surface and at least one of the side surfaces.
[9] The gas storage container according to any one of [1] to [8], wherein the casing has a plurality of side surfaces, and an outlet of the gas container is exposed to outside through a hole provided in at least one of the side surfaces.
[10] The gas storage container according to any one of [1] to [9], wherein the side surface provided with the hole comprises a dent for preventing the outlet from protruding from an outer surface of the casing.
[11] The gas storage container according to [9] or [10], wherein the power receiving member is installed near another side surface opposite to the side surface provided with the hole.
[12] The gas storage container according to any one of [1] to [11], wherein one of the upper surface and the lower surface is provided with a protrusion, and the other of the upper surface and the lower surface is provided with a recess corresponding to the protrusion.
[13] The gas storage container according to any one of [1] to [12], wherein the casing has a plurality of side surfaces, and at least one of the side surfaces is provided with a protrusion, and the other side surface opposite to the one of the side surfaces is provided with a recess corresponding to the protrusion.
[14] The gas storage container according to any one of [1] to [13], wherein the casing has at least one window for making the gas container visible from outside.
[15] The gas storage container according to [14], wherein at least a part of the gas remaining amount measurement module is installed between the casing and the gas container so as not to be visible through the window.
[16] The gas storage container according to any one of [1] to [15], further comprising a porous material in the gas container.
[17] The gas storage container according to [16], wherein the porous material is a Metal Organic Framework (MOF).
[18] A pedestal for contactlessly supplying power to the gas storage container according to any one of [1] to [17], comprising: a bottom portion for resting the gas storage container, the bottom portion being configured to contact the lower surface of the casing; and a side portion for supporting the gas storage container, the side portion comprising at least one power supplying portion with a power supplying member corresponding to the power receiving member.
[19] The pedestal according to [18], wherein the side portion is provided with a certain number of the power supplying portion corresponding to the number of the gas storage containers to be loaded.
[20] The pedestal according to [18] or [19], wherein the side portion comprises a plurality of side units, each comprising at least one power supplying portion and being connectable to each other.
[21] The pedestal according to any of [18] to [20], wherein the gas storage container has a protrusion or a recess on the lower surface, and the pedestal has a recess or a protrusion on the bottom portion corresponding to the protrusion or the recess on the gas storage container.
[22] The pedestal according to any of [18] to [21], wherein the casing of the gas storage container has a plurality of side surfaces and further comprises a grip on an outer edge between the lower surface and at least one of the side surfaces, and the pedestal further comprises a fixing member for physically connecting the bottom portion with the grip.
[23] The pedestal according to any of [18] to [22], wherein the bottom portion is further configured to be laterally connectable to a bottom portion of another pedestal.
[24] The pedestal according to any of [18] to [23], wherein the gas storage container further comprises a battery chargeable by the contactless power supply, and the power supplying portion further comprises a lamp for indicating a state of charge of the battery.
[25] A gas storage system, comprising: one or more gas storage containers according to any one of [1] to [17]; and one or more pedestals according to any one of [18] to [24].

### Advantageous Effects of Invention

The present invention makes it possible to realize a configuration in which the user can supply power to the gas remaining amount measurement module in the gas storage container at their own place.

### BRIEF DESCRIPTION OF DRAWINGS

FIG. 1 is a perspective view of a gas storage container according to one embodiment of the present invention as viewed from the top.
FIG. 2 is a perspective view of a gas storage container according to one embodiment of the present invention as viewed from the bottom.
FIG. 3 is a perspective view of a gas storage container according to one embodiment of the present invention as viewed from the back.
FIG. 4 is a conceptual diagram illustrating an example of a configuration of a gas remaining amount measurement module.
FIG. 5 is an exploded view of the gas storage container according to one embodiment of the present invention, showing a state where a part of the casing and the gas container are removed. FIG. 5 shows an example of a specific arrangement of the gas remaining amount measurement module.
FIG. 6 is a perspective view of a pedestal and gas storage system according to one embodiment of the invention.
FIG. 7 is a perspective and exploded view of a pedestal and gas storage system according to another embodiment of the invention.
FIG. 8 is a conceptual diagram showing an example of a configuration of a power supplying (transmitting) portion of a pedestal according to an embodiment of the present invention.
FIG. 9 is a perspective view of an example of a gas storage system according to an embodiment of the invention.
FIG. 10 is a front view showing an example of a gas storage system in which pedestals according to an embodiment of the present invention are arranged in a horizontal direction.

### DESCRIPTION OF EMBODIMENTS

Some examples of a gas storage container, a pedestal, and a gas storage system according to the present invention are described below. When referring to the drawings, the same reference numerals are given to the components exhibiting the same or similar functions, and duplicate description will be omitted.

As described above, the gas storage container according to the present invention comprises: a casing with a flat upper surface and a flat lower surface and is vertically stackable; a gas container installed in the casing; and a gas remaining amount measurement module comprising a power receiving member for a contactless power supply.

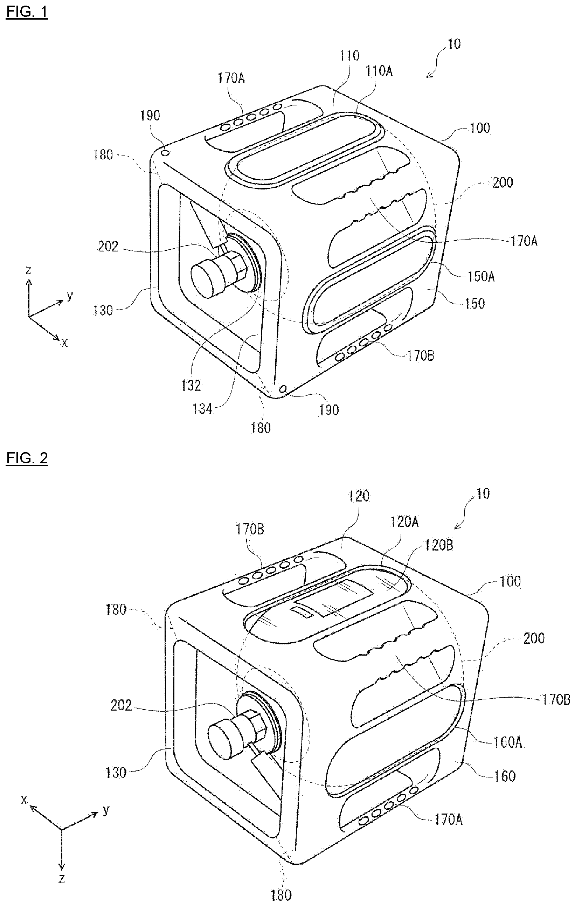

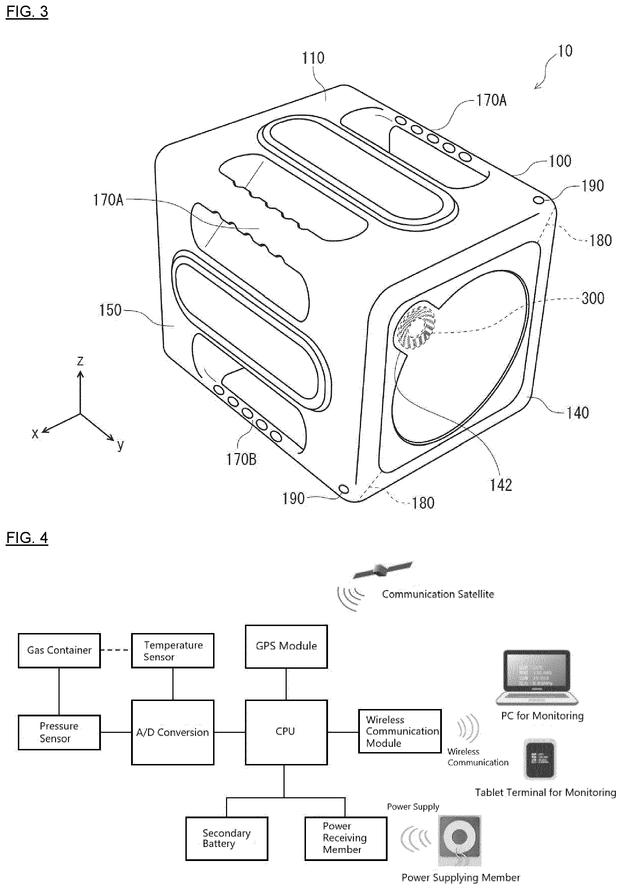

FIG. 1 is a perspective view of a gas storage container according to one embodiment of the present invention as viewed from the top. FIG. 2 is a perspective view of a gas storage container according to one embodiment of the present invention as viewed from the bottom. FIG. 3 is a perspective view of a gas storage container according to one embodiment of the present invention as viewed from the back. The gas storage container 10 shown in FIGs. 1 to 3 includes a casing 100, a gas container 200, and a gas remaining amount measurement module 300.

In this embodiment, casing 100 is substantially rectangular in shape and includes an upper surface 110, a lower surface 120, a front surface 130, a back surface 140, a right side surface 150, and a left side surface 160. That is, the casing 100 has an upper surface 110, a lower surface 120, and four side surfaces 130 to 160. Note that the expressions such as "upper surface," "lower surface," "front surface," "back surface," "right side surface," "left side surface," and "side surface" are only relative and do not limit the actual usage of the gas storage container 10. For example, it is also possible to use the gas storage container 10 with the "front surface" facing upward.

The upper surface 110 and the lower surface 120 are substantially flat. Thereby, the casings 100 can be stacked vertically. Adopting such a configuration makes it possible to easily and effectively transport and install the gas storage container.

The upper surface 110 includes a protrusion (a convex portion) 110A. The lower surface 120 includes a recess (a concave portion) 120A having a shape corresponding to the protrusion 110A. Typically, the protrusion 110A is configured to fit into the recess 120A. By employing such a configuration, it becomes possible to stack the casings 100 in the vertical direction more stably. The protrusion 110A and the recess 120A may be omitted. Note that when the protrusion and the recess "fit" here, it is not necessary for them to be physically fixed to each other, but it is sufficient if the shapes of both are spatially fitted to each other.

In this embodiment, the recess 120A is provided with a window 120B for making the gas container 200 visible from the outside. In the example shown in FIG. 2, the label attached to the gas container 200 can be visually recognized through the window 120B. By adopting such a configuration, it becomes possible to efficiently acquire information regarding the gas container 200 without the need for removing the casing 100 or checking the gas remaining amount measurement module 300 using an electronic device.

The window 120B is typically transparent or translucent, preferably transparent, and more preferably colorless and transparent. The window 120B may be hollow or may include a transparent or translucent member. In the latter case, the material of the transparent or translucent member that may be fitted into the window 120B is, for example, plastic or glass, preferably plastic. When the window 120B includes a transparent or translucent member, it is possible to minimize the decrease in the strength of the casing 100 due to the provision of the window 120B. The window 120B may be omitted.

The front surface 130 is substantially flat and includes a hole 132. The hole 132 has the role of exposing an outlet 202 of the gas container 200 to the outside. The hole 132 may be provided on a surface other than the front surface 130. Placing the hole 132 on at least one side surface rather than on the upper surface 110 or the lower surface 120 allows the gas storage containers 10 to be stacked one above the other even when the outlet 202 is equipped with a valve and/or regulator.

The front surface 130 further includes a dent 134 to prevent the outlet 202 from protruding from the outer surface of the casing 100. By adopting such a configuration, the occupied volume per piece can be reduced when carrying the gas storage containers 10. The outlet 202 is typically equipped with a valve. Additionally, when the gas storage container 10 is in use, a regulator (not shown) is typically attached to the valve. The dent 134 provided on the front surface 130 is typically constructed so that the outlet 202 does not protrude from the outer surface of the casing 100 when the outlet 202 is fitted with a valve but not a regulator. The dent 134 may be omitted.

The back surface 140 is substantially flat and is opposed to the front surface 130. Inside the casing 100 near the back surface 140 of the gas storage container 10, a power receiving member of the gas remaining amount measurement module 300 is installed. A recess 142 is provided on the back surface 140 at a position corresponding to the power receiving member of the gas remaining amount measurement module 300. The configuration of the gas remaining amount measurement module 300 will be explained in detail later. The recess 142 may be omitted.

The right side surface 150 is substantially flat. The right side surface 150 is provided with a protrusion 150A. The shape of the protrusion 150A is typically the same as the shape of the protrusion 110A. The protrusion 150A may be omitted.

The left side surface 160 is substantially flat and is opposed to the right side surface 150. The left side surface 160 is provided with a recess 160A. The shape of the recess 160A is typically the same as the shape of the recess 120A, except that it does not include the window 120B. That is, the recess 160A has a shape corresponding to the protrusion 150A. By employing such a configuration, it becomes possible to efficiently arrange the casings 100 in the lateral direction as well. The recess 160A may be omitted.

The casing 100 has a first grip 170A on the outer edge between the upper surface 110 and the right side surface 150. The casing 100 also has a first grip 170A on the outer edge between the upper surface 110 and the left side surface 16 0. Adopting such a configuration makes it easier for a user to transport the gas storage container 10. Further, when such a configuration is adopted, fixing of the gas storage container 10 becomes easier, as will be described later. Furthermore, when the grip(s) is formed by providing a hollow part on the outer edge as shown in FIGs 1 to 3, it is possible to yet reduce the weight of the gas storage container 10. The first grip(s) 170A may be omitted.

The casing 100 has a second grip 170B on the outer edge between the lower surface 120 and the right side surface 150. The casing 100 also has a second grip 170B on the outer edge between the lower surface 120 and the left side surface 160. Adopting such a configuration makes it easier for a user to transport and secure the gas storage container 10. Also, when the grip(s) is formed by providing a hollow part on the outer edge as shown in FIGs 1 to 3, it is possible to further reduce the weight of the gas storage container 10. The second grip(s) 170B may be omitted.

The casing 100 is configured to be able to be divided into two parts along a diagonal connecting surface 180. In the example shown in FIGs. 1 to 3, one portion includes the upper surface 110, the right side surface 150, a half of the front surface 130, and a half of the back surface 140. The other portion includes a lower surface 120, a left side surface 160, the remaining half of the front surface 130, and the remaining half of the back surface 140. These two parts are joined by screws (not shown) through screw holes 190. At this time, the casing 100 can be prevented from being easily disassembled by the user by forming the screw tool hole into a special shape. The connecting surface 180 and the screw hole 190 may be omitted.

The parts constituting the casing 100 may be joined by other methods. If the casing 100 is configured to be divisible, the casing 100 can be replaced relatively easily by an administrator of the gas storage container 10. There is no restriction on the method of dividing the casing 100.

The material of the casing 100 is not particularly limited and can be appropriately selected depending on the required strength, desired weight, ease of forming, degree of electrical interference during the contactless power supply, and the like. The material of the casing 100 is, for example, plastic, fiber-reinforced plastic, metal, or an alloy, preferably plastic or fiber-reinforced plastic.

In the configurations shown in FIGs. 1 to 3, the casing 100 has a rectangular parallelepiped shape, but the shape of the casing 100 is not particularly limited as long as it satisfies the above requirements regarding the upper and lower surfaces. The casing 100 has, for example, a cylindrical shape or a prismatic shape, preferably a quadrangular prism, a pentagonal prism, or a hexagonal prism shape, and more preferably a quadrangular prism or a hexagonal prism shape. When the casing 100 has a prismatic shape, it is preferable that the casing 100 has a regular polygonal column shape. The casing 100 is more preferably rectangular or cubic in shape, especially preferably rectangular.

Furthermore, in the configurations shown in FIGs. 1 to 3, all of the plurality of side surfaces 130 to 160 are substantially flat. In this case, since a plurality of gas storage containers 10 can be efficiently arranged, the effective volume occupied during transportation and use can be particularly reduced. However, the plurality of side surfaces 130 to 160 do not necessarily have to be flat. For example, in a four-sided configuration as shown in FIGs. 1-3, it is possible to employ a configuration in which the front surface 130 and back surface 140 are not flat, but the right side surface 150 and left side surface 160 are substantially flat.

In the configuration shown in FIGs. 1 to 3, the upper surface 110 includes a protrusion 110A, and the lower surface 120 includes a recess 120A corresponding to the protrusion 110A, but there is no particular restriction on the configuration of these protrusions and recesses. For example, the upper surface 110 may include a recess, and the lower surface may include a protrusion corresponding to the recess. The shapes of the protrusion and the recess are also not particularly limited as long as the pairs provided at corresponding locations correspond to one another. These protrusions and recesses may be omitted.

In the configuration shown in FIGs. 1 to 3, the right side surface 150 includes a protrusion 150A, and the left side surface 160 opposing to it includes a recess 160A corresponding to the protrusion 150A, but there is no particular restriction on the configuration of these protrusions and recesses. For example, the right side surface 150 may include a recess, and the left side surface 160 may include a protrusion corresponding to the recess. The shapes of the protrusion and the recess are also not particularly limited as long as the pairs provided at corresponding locations correspond to one another. These protrusions and recesses may be omitted.

In the configuration shown in FIGs. 1 to 3, a window 120B is provided in the recess 120A, but there are no particular restrictions on the position of such a window as long as the function of making the gas container 200 visible from the outside can be ensured. For example, the window may be provided in at least one of the other protrusions and/or recesses mentioned above. Alternatively, the window may be provided in a portion of the casing 100 other than the protrusions and/or the recesses. A plurality of windows may be provided at multiple locations on the casing 100. In addition, when providing a window in one of a protrusion and a recess, it is more preferable to provide a window in a recess from a viewpoint of the mechanical strength and breakage possibility of the window. Such a window may be omitted.

In the configuration shown in FIGs. 1 to 3, the first grip 170A and the second grip 170B are provided, but there is no particular restriction on the configuration of the grip parts. The grip(s) may be provided at other locations on the casing 100. However, as described above, if the grip(s) is formed by providing a hollow part on the outer edge of the casing 100, it becomes possible to more effectively utilize the part of the casing 100 that does not include the gas container 200 (i.e. dead zone). The grip(s) may be omitted.

In the embodiment shown in FIGs. 1 to 3, the gas container 200 is installed inside the casing 100. In FIGs. 1 and 2, parts of the gas container 200 that are not visible from the outside are drawn with broken lines. Similarly, in FIGs. 1 and 2, the portion of the gas container200 that is visible from the outside is drawn with a solid line. In FIG. 3, the illustration of the gas container 200 is omitted.

The gas container 200 includes a gas outlet 202. The gas outlet 202 usually also serves as a gas inlet. The outlet 202 is exposed to the outside through the hole 132 of the casing 100.

The gas container 200 typically has a rounded shape. By adopting such a configuration, the pressure resistance performance of the gas container 200 can be optimized. The gas containers 200 themselves can not normally be stacked on top of each other. However, since the gas containers 200 are housed within the casing 100, the gas storage containers 10 can be stacked regardless of the shape of the gas containers 200.

Any material can be used for the gas container 200. The gas container 200 is, for example, made of fiber-reinforced plastic, metal or alloy, or comprises fiber-reinforced plastic and metal or alloy. Alternatively, the gas container 200 may be made of duralumin. The material used for the gas container 200 can be appropriately selected in consideration of formability and weight. The material of gas container 200 is typically different than the material of casing 100. Therefore, it is possible to adjust the strength, weight, pressure resistance, appearance, and the like of the entire gas storage container 10 by independently optimizing the material for the casing 100 and the material of the gas container 200.

There is no restriction in the kind of gas to be stored in the gas container 200. Examples of such gases include nitrogen; oxygen; air; carbon dioxide; rare gases such as helium, neon, argon, krypton, and xenon; hydrogen; saturated hydrocarbons such as methane, ethane, and propane; acetylene; fluorocarbons such as difluoromethane; LP gas; natural gas; monosilane; theos; dichlorosilane; arsine; phosphine; diborane; boron trichloride; carbon tetrafluoride; nitrogen trifluoride; hydrogen bromide; chlorine; tungsten hexafluoride; hydrogen selenide; monogermane; ethylene oxide; nitrous oxide; and ammonia. Among these, it is particularly preferable to use a gas selected from the group consisting of nitrogen, oxygen, air, argon, xenon, fluorocarbon, carbon dioxide, methane, and hydrogen. The gas stored in the gas container 200 may be liquefied.

The gas container 200 may further include a porous material therein. In such a case, the amount of gas stored in the gas container 200 can be increased. When filling the gas container 200 with a porous material, the filling rate F of the porous material is, for example, 60% or more, preferably 65% or more, and more preferably 70% or more. In such a case, the effect of increasing the amount of gas stored by filling the porous material becomes more remarkable. The upper limit of the filling rate is 100%, but the filling rate may be slightly lowered from the viewpoint of gas filling efficiency, exhaust heat, and the like. For example, the filling rate of the porous material may be 99% or less. Further, the filling rate may be further reduced in consideration of an increase in the weight of the gas storage container 10 due to the weight of the porous material itself.

As the porous material, for example, a metal organic framework (MOF), activated carbon, zeolite, mesoporous silica, or the like can be used. It is particularly preferable to use the MOF as the porous material. A plurality of types of porous materials may be used in combination.

When the MOF is employed as the porous material, any types of MOFs can be used. Appropriately combining the type and coordination number of the metal ion with the type and topology of the multidentate ligand leads to a MOF with a desired structure.

The metal elements in the MOF can be, for example, any elements belonging to alkali metals (Group 1), alkaline earth metals (Group 2), or transition metals (Groups 3 to 12). The multidentate ligand in the MOF typically is an organic ligand, examples of which include carboxylate anion and heterocyclic compound. Examples of the carboxylic acid anion include dicarboxylic acid anion and tricarboxylic acid anion. Specific examples include anions of citric acid, malic acid, terephthalic acid, isophthalic acid, trimesic acid, and derivatives thereof. Examples of the heterocyclic compound include bipyridine, imidazole, adenine, and derivatives thereof. Alternatively, the ligand may be an amine compound, a sulfonate anion, or a phosphate anion. The MOF may further contain monodentate ligand(s).

The combination of the metal and the ligand forming the MOF can be appropriately determined according to the expected function and the desired pore size. The MOF may contain two or more types of metal elements, and may contain two or more types of ligands. The MOF can be surface-modified with a polymer or other modifiers. Specific examples of the MOF include those listed in the Patent Document 1 above.

There is no restriction in the form of the porous material. As the porous material, for example, a powdery material, a pellet material, a bead material, a film material, or a block material may be used. A plurality of forms of porous materials may be used in combination.

As described above, the gas storage container 10 includes the gas remaining amount measurement module 300. The gas remaining amount measurement module 300 includes a power receiving member for a contactless power supply.

In the previous configuration disclosed in Patent Document 1, the gas remaining amount measurement module was not equipped with the above power receiving member. However, as described above, the present inventor has newly found that the power consumption of the gas remaining amount measurement module is relatively large and its lifespan is thereby limited. The electrical life of the gas remaining amount measurement module is usually shorter than the physical life of the gas container and the casing. Further, the electrical life of the gas remaining amount measurement module could be exhausted while the gas still remains in the gas container. Therefore, in the previous configuration, when the electrical life of the gas remaining amount measurement module is exhausted, it is necessary for the administrator to retrieve the gas storage container from the user and charge or replace the gas remaining amount measurement module, regardless of the condition of the gas container and the casing or the amount of gas still remaining.

In contrast, in the embodiment according to the present invention, the gas remaining amount measurement module 300 includes a power receiving member for contactless power supply. When such a configuration is adopted, the user can supply power to the gas remaining amount measurement module 300 using the power supplying member corresponding to the power receiving member. That is, by employing such a configuration, even if the electrical life of the gas remaining amount measurement module 300 has expired, the user does not need to return or replace the gas storage container 10 itself. Also, the administrator of the gas storage container 10 does not need to collect or replace the gas storage container 10 in such a case.

In the configuration shown in FIG. 3, the power receiving member of the gas remaining amount measurement module 300 is provided near the back surface 140 of the casing 100. That is, in this configuration, the power receiving member is provided on the surface opposing the side surface of the gas container 200 where the gas outlet 202 is exposed. When such a configuration is adopted, even when a plurality of gas storage containers 10 are stacked vertically and/or arranged in parallel on the left and right, the surface on the side where the power receiving member is located remains facing outside. Therefore, when such a configuration is adopted, it becomes possible to easily supply power to any gas storage container 10 even when a plurality of gas storage containers 10 are arranged vertically and/or horizontally.

Note that in this configuration, the power receiving member of the gas remaining amount measurement module 300 is provided inside the casing 100. That is, the power receiving member of the gas remaining amount measurement module 300 is provided between the casing 100 and the gas container 200 and is not exposed to the outside. If such a configuration is adopted, the possibility of failure of the power receiving member can be reduced. Furthermore, by configuring the power receiving member to be invisible from the outside, the overall aesthetic appearance of the gas storage container 10 can also be improved.

The power receiving member of the gas remaining amount measurement module 300 has a configuration that allows contactless power supply. Therefore, there is no need to further provide the gas storage container 10 with a cable port or the like for contact power supply. Therefore, with the above configuration, a decrease in strength of the gas storage container 10 and an increase in manufacturing cost can be suppressed compared to the case where a configuration for performing contact power supply is added thereto.

FIG. 4 is a conceptual diagram illustrating an example of a configuration of a gas remaining amount measurement module. The gas remaining amount measurement module shown in FIG. 4 is an Internet of Things (IoT) module, and includes a pressure sensor, a temperature sensor, an analog/digital (A/D) converter connected to both sensors, and a central processing unit (CPU) connected to the A/D converter.

The pressure sensor is connected, for example, to an outlet of a gas container constituting the gas storage container, and is preferably installed between the gas container and the valve. When a pressure sensor is installed between the gas container and the valve, it becomes possible to constantly measure the pressure inside the gas container. The temperature sensor may be connected to the gas container or placed near the gas container. That is, the temperature sensor may be configured to measure the temperature inside the gas container, or may be configured to measure the temperature in the vicinity of the gas container. If liquefied gas can be stored in the gas container, a liquid level sensor may be used instead of the pressure sensor or in combination with the pressure sensor. As the liquid level sensor, for example, a float sensor, an ultrasonic sensor, or a capacitance sensor can be used. Furthermore, the gas remaining amount measurement module may include a gyro sensor. Gyro sensors can be used, for example, as impact sensors to detect impacts on gas storage containers. As described above, the gas remaining amount measurement module preferably includes at least one sensor selected from the group consisting of a pressure sensor, a liquid level sensor, a temperature sensor, and a gyro sensor.

The CPU is further connected to a wireless communication module configured to perform wireless communication and a GPS communication module configured to perform GPS communication. The wireless communication module is used, for example, to transmit measurement value data to a monitor PC or tablet etc. In the example shown in FIG. 4, information on temperature (25 °C), position (135.405 degrees east longitude / 35.010 degrees north latitude), and pressure (9.85 MPa) is displayed on the monitor PC or tablet. For instance, a Bluetooth (registered trademark) communication module can be used as the wireless communication module. Using such a gas remaining amount measurement module makes it possible for the user to easily follow the remaining amount and position information of the gas storage container 10. This also facilitates inventory management and distribution management of the gas storage containers 10.

The gas remaining amount measurement module shown in FIG. 4 further includes the above-described power receiving member and a rechargeable battery (secondary battery). When such a configuration is adopted, the secondary battery can be charged by power feeding from a power supplying member to the power receiving member. This allows the user to charge the gas remaining amount measurement module, and allows the userto keep using the gas remaining amount measurement module for a long period of time.

There is no particular restriction on the configuration of the power receiving member. The power receiving member is typically a power receiving coil. The contactless power feeding from the power supplying member to the power receiving member may be of a non-radiation type (short distance type) or a radiation type (long distance type). Examples of non-radiative power feeding methods include methods using electromagnetic induction, magnetic field resonance, or electric field coupling. Examples of the radiation type power feeding method include a radio wave method and a laser method. In view of the transmissibility through the shielding material (i.e. casing 100), it is particularly preferable that the contactless power supply from the power supplying member to the power receiving member be performed by the electromagnetic induction method or the magnetic field resonance method. The power supply to the power receiving member can be performed, for example, via a pedestal described later. The power may be supplied to the power receiving member by any other method.

Note that the configuration shown in FIG. 4 is just an example. The configuration of the gas remaining amount measurement module is not particularly limited as long as it is capable of measuring the remaining amount of gas and is provided with a power receiving member for contactless power supply. That is, some of the components shown in FIG. 4 may be omitted as long as the above functions are ensured.

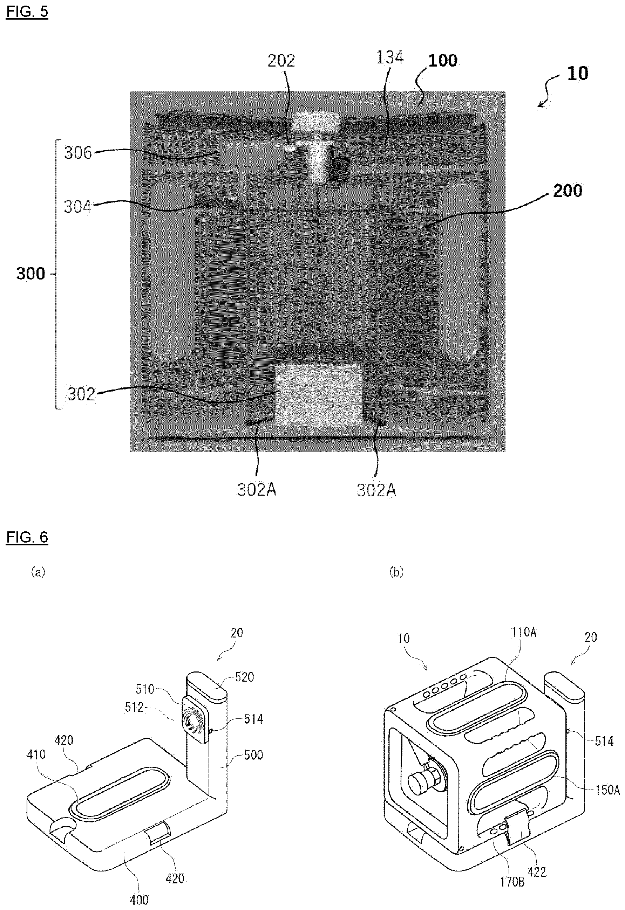

FIG. 5 is an exploded view of the gas storage container according to one embodiment of the present invention, showing a state where a part of the casing and the gas container are removed. FIG. 5 shows an example of a specific arrangement of the gas remaining amount measurement module 300.

In the example shown in FIG. 5, the gas remaining amount measurement module 300 includes an loT box 302, a GPS module 304, and a pressure sensor 306. The loT box 302, the GPS module 304, and the pressure sensor 306 are connected to each other by wire (not shown) or are connected wirelessly. Of the gas remaining amount measurement module 300, the loT box 302 and the GPS module 304 are installed in a gap between the casing 100 and the gas container 200.

The loT box 302 is installed near the back surface 140 of the casing 100. The loT box 302 includes therein a power receiving member, a secondary battery, a wireless communication module, and a CPU. An antenna 302A for wireless communication extends outside the loT box 302.

The wireless communication module 304 is provided separately outside the loT box 302. By adopting such a configuration, for example, heat generation due to intensive use and electrical interference with other components can be minimized.

Pressure sensor 306 is connected to outlet 202 of gas container 200. Pressure sensor 306 is typically located within a dent 134 in front surface 130 of casing 100. Moreover, the pressure sensor 306 is typically installed between the gas container 200 and a valve (not shown).

In the example shown in FIG. 5, the gas remaining amount measurement module 300 other than the pressure sensor 306 is provided between the casing 100 and the gas container 200. In this way, by adopting a configuration in which at least a portion of the gas remaining amount measurement module 300 is installed between the casing 100 and the gas container 200, the possibility of failure of the gas remaining amount measurement module 300 can be reduced. Further, by adopting such a configuration, it is also possible to prevent an increase in the volume occupied by the gas storage container 10 due to the addition of the gas remaining amount measurement module 300.

In addition, when the casing 100 of the gas storage container 10 comprises a window for making the gas container 200 visible from the outside, it is preferable that at least a part of the gas remaining amount measurement module 300 is installed between the casing 100 and the gas container 200 so that it is not visible from the window. By employing such a configuration, it is possible to reduce the possibility that the aesthetic appearance of the gas storage container 10 is impaired due to the presence of the gas remaining amount measurement module 300. Further, by employing such a configuration, it is possible to reduce the possibility that the gas remaining amount measurement module 300 will obstruct visual recognition of the gas container 200 from the outside.

As described above, the configuration of the gas remaining amount measurement module 300 shown in FIG. 5 is just an example. Each component of the gas remaining amount measurement module 300 shown in FIG. 5 may be arranged at other locations in the gas storage container 10. For example, the GPS module 304 may be installed inside the loT box 302. Further, some of the components of the gas remaining amount measurement module 300 shown in FIG. 5 may be omitted as appropriate.

Gas storage container 10 is typically portable by human. The total weight of the gas storage container 10 is, for example, 30 kg or less, preferably 25 kg or less, more preferably 20 kg or less, particularly preferably 15 kg or less. Note that here, the total weight of the gas storage container 10 is the total weight of the casing 100, the gas container 200, and the gas remaining amount measurement module 300. This total weight does not include the weight of the gas filled into the gas container 200. However, if the gas container 200 further includes a porous material, the total weight shall also include the weight of the porous material.

As described above, the gas storage container according to one aspect of the present invention is configured to be able to perform contactless power supply via the power receiving member of the gas remaining amount measurement module. Hereinafter, the configuration of a pedestal for performing such contactless power supply will be described by way of example. Further, a configuration example of a gas storage system including such a gas storage container and a pedestal will also be described.

FIG. 6 is a perspective view of a pedestal and gas storage system according to one embodiment of the invention. FIG. 6(a) shows an example of the pedestal 20 without the gas storage container 10 mounted thereon. FIG. 6(b) shows an example of the pedestal 20 with the gas storage container 10 mounted thereon (i.e. gas storage system).

The pedestal 20 includes a bottom portion 400 on which the gas storage container 10 is to be placed. This bottom portion 400 is configured to contact a lower surface 120 (not shown) of the casing 100 of the gas storage container 10. The bottom portion 400 is substantially flat, similar to the upper surface 110 and the lower surface 120 of the casing 100 of the gas storage container 10.

The bottom portion 400 includes a protrusion 410. This protrusion 410 has substantially the same shape as the protrusion 110A provided on the upper surface 110 of the casing 100 of the gas storage container 10. That is, the protrusion 410 has a shape corresponding to the recess 120A provided on the lower surface 120 (not shown) of the casing 100 of the gas storage container 10. By employing such a configuration, it is possible to prevent the gas storage container 10 from shifting on the pedestal 20. The protrusion 410 may be omitted.

The bottom portion 400 includes an attachment part 420 for attaching a fixing member 422. The fixing member 422 is a member for more firmly connecting the gas storage container 10 with the bottom portion 400 of the pedestal 20. In the example shown in FIG. 6, the fixing member 422 connects the second grip 170B of the gas storage container 10 and the bottom part 400 of the pedestal 20. The attachment part 420 can also be used when horizontally connecting the bottom part 400 of a pedestal 20 to the bottom part of another pedestal, as will be described later. The fixing member 422 and its attachment part 420 may be omitted.

The pedestal 20 includes a side portion 500 for supporting the gas storage container 10. In the example shown in FIG. 6, the side portion 500 supports at least one side surface of the gas storage container 10, that is, the back surface 140 of the gas storage container 10. The side portion 500 includes at least one power supplying portion 510 including a power supplying member 512 corresponding to the power receiving member of the gas storage container 10 .

The side portion 500 extends substantially perpendicularly from one end of the bottom portion 400. The side portion 500 may be formed integrally with the bottom portion 400 or may be configured to be freely removable from the bottom portion 400.

The side portion 500 includes at least one power supplying portion 510. A power supplying member 512 is installed inside the power supplying portion 510. The power supplying portion 510 plays a role of contactlessly supplying power to the power receiving member of the gas storage container 10 through the power supplying member 512.

The power supplying member 512 is installed in a position corresponding to the power receiving member of the gas storage container 10. In the example shown in FIG. 6, the power supplying member 512 is installed in a position corresponding to the recess 142 in the back surface 140 (not shown) of the gas storage container 10. The power supplying member 512 is, for example, a power supplying coil. As described above, there are no restrictions on the method of contactless power feeding from the power supplying member to the power receiving member. The contactless power supply is preferably performed by an electromagnetic induction method or a magnetic resonance method.

The power supplying member 512 of the power supplying portion 510 is typically supplied with current from an external power source (not shown). The power source can be connected to any position on the pedestal 20. The power source may be configured to be connected to the bottom portion 400 of the pedestal 20 or may be configured to be connected to the side portion 500 of the pedestal 20. If the side portion 500 is configured to be freely removable from the bottom portion 400, the power source is more preferably configured to be connected to the bottom portion 400 of the pedestal 20.

The power supplying portion 510 further includes a lamp 514 in its vicinity. When the installed gas storage container 10 is equipped with a secondary battery, the lamp 514 plays a role in indicating whether or not charging of the secondary battery is completed. The lamp 514 is configured, for example, to emit green light when charging is complete, and to emit red light when charging is incomplete. For this purpose, the lamp 514 is installed at a position where it can be seen from the outside even when the gas storage container 10 is loaded. The lamp 514 may be omitted.

The side portion 500 includes a lid 520 at its top. The lid 520 can be removed if necessary. Removal of the lid 520 allows stacking of the side units as described below.

The pedestal 20 may be configured to be fixed to a floor or a wall. For example, the bottom portion 400 of the pedestal 20 may be configured to be fixed to a floor, and the side portion 500 of the pedestal 20 may be configured to be fixed to a wall. These fixings can be performed using, for example, bolts or the like. If such a configuration is adopted, the possibility that the pedestal 20 or the gas storage container 10 will move or fall can be reduced. Furthermore, in the gas storage system, even if the pedestal 20 is fixed, the gas storage container 10 can be freely removed and moved. Therefore, even when the pedestal 20 is fixed, the portability of the gas storage container 10 is ensured.

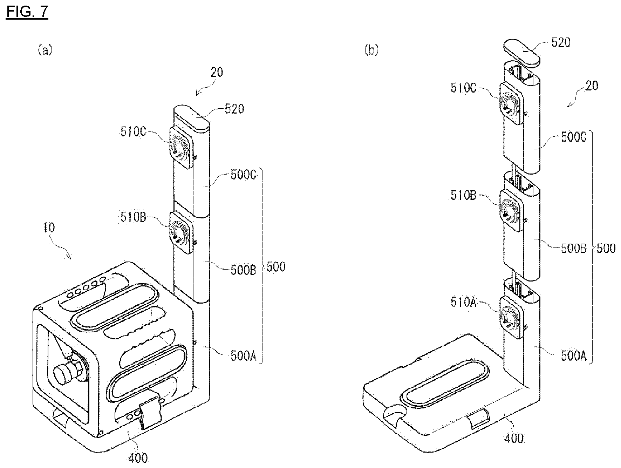

FIG. 7 is a perspective and exploded view of a pedestal and gas storage system according to another embodiment of the invention. FIG. 7(a) shows an example of the pedestal 20 with the gas storage container 10 mounted thereon (i.e. gas storage system). FIG. 7(b) shows an exploded view of the side portion 500 of the pedestal 20 without the gas storage container 10 mounted thereon. The pedestal 20 shown in FIG. 7 is similar to the pedestal shown in FIG. 6, except that it has three power supplying portions 510A to 510C, and it can simultaneously supply power to three gas storage containers 10 stacked one above the other.

In the pedestal 20 shown in FIG. 7, the side part 500 has three power supplying portions 510A to 510C. That is, the side portion 500 includes the number of power supplying portions 510 that corresponds to the number of gas storage containers 10 that can be loaded. Each of the power supplying portions 510A to 510C includes at least one power supplying member. Furthermore, at least one lamp is provided near each of the power supplying portions 510A to 510C.

In the example shown in FIG. 7, the side portion 500 comprises three side units 500A to 500C. The three side units 500A to 500C are separable from each other and each includes at least one power supplying portion 510A to 510C, respectively. These side units 500A to 500C are stacked vertically and connected to each other. A lid 520 is attached to the top of the side unit 510C. When such a configuration is adopted, the height of the pedestal 20 can be adjusted as appropriate depending on the required number of gas storage containers 10 to be loaded. There is no limit to the number of side units.

As described above, the side units 500A to 500C are stacked vertically and are at least physically connected. The side units 500 A to 500 C are typically configured to be simultaneously electrically connected by being stacked vertically. If such a configuration is adopted, there is no need to individually connect an external power source to each of the side units, and the configuration of the pedestal 20 can be simplified. Note that the electrical connection between the side units may be made separately using a cable or the like.

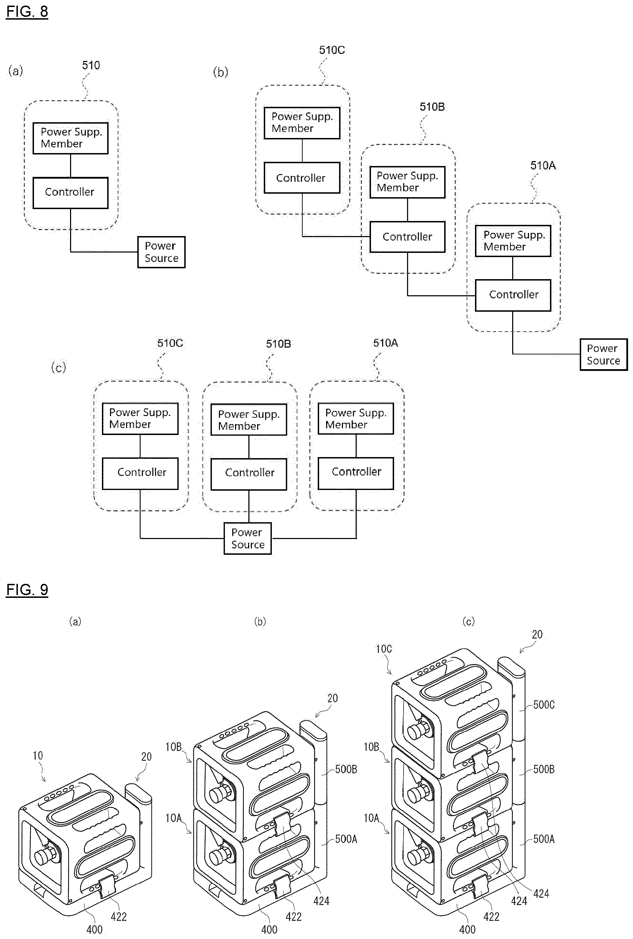

FIG. 8 is a conceptual diagram showing an example of a configuration of a power supplying (transmitting) portion of a pedestal according to an embodiment of the present invention. FIG. 8(a) shows an example in which the side portion 500 includes one power supplying portion 510. FIG. 8(b) shows an example in which the side portion 500 includes three power supplying portions 510A to 510C, which are connected in series from a power source. FIG. 8(c) is an example in which the side portion 500 includes three power supplying portions 510A to 510C, which are connected in parallel from a power source.

In the example shown in FIG. 8(a), the power supplying portion 510 includes a power supplying member and a controller. The power supplying member is supplied with current from the power source via the controller.

In the example shown in FIG. 8(b), each of the power supplying portions 510A to 510C includes a power supplying member and a controller. In this example, the controller of the power supply portion 510A, the controller of the power supply portion 510B, and the controller of the power supply portion 510C are connected in series from a single power source. That is, the controller of the power supplying portion 510A is connected to the power source, the controller of the power supply portion 510B is electrically connected to the controller of the power supply portion 510A, and the controller of the power supply portion 510C is electrically connected to the controller of the power supplying portion 510B. When such a configuration is adopted, it becomes possible to supply current to a plurality of power supply portions from a single power source.

In the example shown in FIG. 8(c), each of the power supplying portions 510A to 510C includes a power supplying member and a controller. In this example, the controller of the power supplying portion 510A, the controller of the power supplying portion 510B, and the controller of the power supplying portion 510C are connected in parallel to a single power source. When such a configuration is adopted, it becomes possible to supply current to a plurality of power supplying portions from a single power source. In particular, when such a parallel connection is made, it is possible to more stably supply current to the plurality of power supplying portions, compared to a case where a series connection is made.

Note that the above configuration is just an example, and electrical connections can be made in other forms. For example, a configuration may be adopted in which a plurality of power supplying portions and a plurality of power sources are individually connected to each other. The controller(s) may be omitted.

As described above, the number of power supplying portions 510 on the side portion 500 of the pedestal 20 can be adjusted according to the mode of use of the gas storage container 10.

FIG. 9 is a perspective view of an example of a gas storage system according to an embodiment of the invention. FIG. 9(a) shows an example in which the side portion 500 of the pedestal 20 has one power supplying portion 510 (not shown) and one gas storage container 10 is mounted. FIG. 9(b) shows an example in which the side portion 500 of the pedestal 20 has two power supplying portions 510A and 510B (not shown) and two gas storage containers 10A and 10B are mounted. FIG. 9(c) shows an example in which the side portion 500 of the pedestal 20 has three power supplying portions 510A to 510C (not shown) and three gas storage containers 10A to 10C are mounted.

In the example shown in FIG. 9(b), two gas storage containers 10A and 10B are stacked one above the other, and correspondingly two side units 500A and 500B are stacked one above the other. In the example shown in FIG. 9(c), three gas storage containers 10A to 10C are stacked one above the other, and correspondingly, three side units 500A to 500C are stacked one above the other. Among the plurality of gas storage containers 10, those in contact with the bottom portion 400 are further fixed by a fixing member 422 by connecting the second grip 170B and the attachment part 420 (not shown). Further, the plurality of gas storage containers 10 are also connected to each other via an auxiliary fixing member 424. The connection by the auxiliary fixing member 424 is made between the first grip(s) 170A of the lower gas storage container and the second grip(s) 170B of the upper gas storage container. The auxiliary fixing member 424 may be omitted.

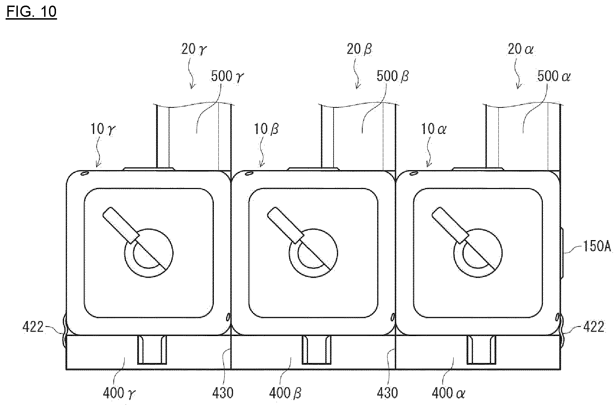

FIG. 10 is a front view showing an example of a gas storage system in which pedestals according to an embodiment of the present invention are arranged in a horizontal direction. The gas storage system shown in FIG. 10 includes three horizontally arranged pedestals 20α to 20γ and three gas storage containers 10α to 10γ installed on each pedestal.

In the example shown in FIG. 10, the pedestals 20α to 20γ are connected to each other in the horizontal direction at their bottom portions 400α to 400γ. This connection is typically made by a horizontal fixing member 430 via the attachment part 420 (not shown). Further, the outermost gas storage containers 10α and 10γ are fixed by fixing members 422 to the bottom portions 400α and 400γ of the pedestals 20α and 20γ, respectively. Further, the gas storage containers 10 that are adjacent to each other are further fixed by fitting the protrusion 150A provided on the right side surface 150 and the recess 160A (not shown) provided on the left side surface 160 into each other. If such a configuration is adopted, it becomes possible to further suppress horizontal displacement of the gas storage container 10 and the pedestal 20. The horizontal fixing member 430, the fixing member 422, the protrusion 150A, and the recess 160A may be omitted.

When a plurality of pedestals 20 are connected in the horizontal direction, as shown in FIG. 10, the configuration may be such that the electrical connection is made simultaneously with the physical connection between the multiple pedestals 20. In this case, if a power source is connected to at least one of the plurality of pedestals 20, power can be supplied to the gas storage container 10 even by the other pedestals 20 that are not connected to the power source. By adopting such a configuration, it becomes possible to further simplify the gas storage system.

In the examples shown in FIGs. 6 to 10, a configuration in which the bottom portion 400 is provided with a protrusion 410 has been described, but there is no particular restriction on the configuration of the protrusion. For example, when the lower surface of the gas storage container 10 is provided with a protrusion, it is preferable that the bottom portion 400 is provided with a recess corresponding to the protrusion. Further, as described above, the protrusion 410 may be omitted.

In the examples shown in FIGs. 6 to 10, the fixing member 422, the auxiliary fixing member 424, and the horizontal fixing member 430 have been described, but there are no particular limitations on their specific structures. Further, the configuration in which the fixing member 422 and the auxiliary fixing member 424 are connected through the gripp(s) of the gas storage container 10 has been described, but the fixing member 422 and the auxiliary fixing member 424 may be connected through other locations. In addition, although the configuration of connecting the fixing member 422 and the horizontal fixing member 430 through the attachment part 420 of the bottom portion 400 has been described, the fixing member 422 and the horizontal fixing member 430 may be connected through other locations. Further, as described above, these fixing members may be omitted.

In the examples shown in FIGs. 7 to 9, an example has been described in which the side portion 500 comprises a plurality of mutually divisible side units; however, the side portion 500 may comprise a single unit. For example, the side portion 500 may be configured by a single unit having a plurality of power supplying portions.

The example shown in FIG. 9 describes a gas storage system in which the gas storage containers 10 are stacked only in the vertical direction, and the example shown in FIG. 10 describes a gas storage system in which the gas storage containers 10 are arranged only in the horizontal direction. However, these configurations may be combined with each other. For example, if three pedestals 20 each having three gas storage containers 10 stacked vertically are arranged horizontally, a gas storage system including 3×3=9 gas storage containers 10 can be constructed. Since the number of vertically and horizontally arranged gas storage containers is arbitrary, a gas storage system can be constructed as appropriate to meet the needs of the user.

When the gas storage system includes a plurality of gas storage containers 10, each of the gas storage containers 10 may store different types of gas. By adopting such a configuration, it is possible to construct a gas storage system that can supply multiple types of gas. Further, by installing a plurality of gas storage containers 10 containing the same type of gas, the substantial storage capacity of the gas can be increased. In this way, by allowing the configurations of the gas storage container 10 and the pedestal 20 to be customized, it is possible to provide a flexible gas storage system that meets the needs of the user.

This specification has described a configuration in which a gas storage container has a casing whose upper and lower surfaces are flat and can be stacked vertically, a gas container installed in the casing, and a gas remaining amount measurement module, the gas remaining amount measurement module having a power receiving member for contactless power supply. However, the gas remaining amount measurement module having such a power receiving member may also be used generically for gas storage containers of any shape. That is, such a gas remaining amount measurement module may also be applied to gas storage containers of any shape that is not vertically stackable.

## Claims

1. A gas storage container, comprising:
a casing with a flat upper surface and a flat lower surface and is vertically stackable;
a gas container installed in the casing; and
a gas remaining amount measurement module comprising a power receiving member for a contactless power supply.

2. The gas storage container according to claim 1, wherein
at least a part of the gas remaining amount measurement module is installed in a space between the casing and the gas container.

3. The gas storage container according to claim 1 or 2, wherein
the gas remaining amount measurement module comprises at least one sensor selected from the group consisting of a pressure sensor, a liquid level sensor, a temperature sensor, and a gyro sensor.

4. The gas storage container according to any one of claims 1 to 3, wherein
the gas remaining amount measurement module is configured to perform wireless communication.

5. The gas storage container according to any one of claims 1 to 4, wherein
the gas remaining amount measurement module is configured to perform GPS communication.

6. The gas storage container according to any one of claims 1 to 5, wherein
the gas remaining amount measurement module further comprises a battery chargeable by the contactless power supply.

7. The gas storage container according to any one of claims 1 to 6, wherein
the casing has a plurality of side surfaces and further comprises a first grip on an outer edge between the upper surface and at least one of the side surfaces.

8. The gas storage container according to any one of claims 1 to 7, wherein
the casing has a plurality of side surfaces and further comprises a second grip on an outer edge between the lower surface and at least one of the side surfaces.

9. The gas storage container according to any one of claims 1 to 8, wherein
the casing has a plurality of side surfaces, and an outlet of the gas container is exposed to outside through a hole provided in at least one of the side surfaces.

10. The gas storage container according to claim 9, wherein
the side surface provided with the hole comprises a dent for preventing the outlet from protruding from an outer surface of the casing.

11. The gas storage container according to claim 9 or 10, wherein
the power receiving member is installed near another side surface opposite to the side surface provided with the hole.

12. The gas storage container according to any one of claims 1 to 11, wherein
one of the upper surface and the lower surface is provided with a protrusion, and the other of the upper surface and the lower surface is provided with a recess corresponding to the protrusion.

13. The gas storage container according to any one of claims 1 to 12, wherein
the casing has a plurality of side surfaces, and at least one of the side surfaces is provided with a protrusion, and the other side surface opposite to the at least one of the side surfaces is provided with a recess corresponding to the protrusion.

14. The gas storage container according to any one of claims 1 to 13, wherein
the casing has at least one window for making the gas container visible from outside.

15. The gas storage container according to claim 14, wherein
at least a part of the gas remaining amount measurement module is installed between the casing and the gas container so as not to be visible through the window.

16. The gas storage container according to any one of claims 1 to 15,
further comprising a porous material in the gas container.

17. The gas storage container according to claim 16, wherein
the porous material is a Metal Organic Framework.

18. A pedestal for contactlessly supplying power to the gas storage container according to any one of claims 1 to 17, comprising:
a bottom portion for resting the gas storage container, the bottom portion being configured to contact the lower surface of the casing; and
a side portion for supporting the gas storage container, the side portion comprising at least one power supplying portion with a power supplying member corresponding to the power receiving member.

19. The pedestal according to claim 18, wherein
the side portion is provided with a certain number of the power supplying portion corresponding to the number of the gas storage containers to be loaded.

20. The pedestal according to claim 18 or 19, wherein
the side portion comprises a plurality of side units, each comprising at least one power supplying portion and being connectable to each other.

21. The pedestal according to any one of claims 18 to 20, wherein
the gas storage container has a protrusion or a recess on the lower surface, and the pedestal has a recess or a protrusion on the bottom portion corresponding to the protrusion or the recess on the gas storage container.

22. The pedestal according to any one of claims 18 to 21, wherein
the casing of the gas storage container has a plurality of side surfaces and further comprises a grip on an outer edge between the lower surface and at least one of the side surfaces, and
the pedestal further comprises a fixing member for physically connecting the bottom portion with the grip.

23. The pedestal according to any one of claims 18 to 22, wherein
the bottom portion is further configured to be laterally connectable to a bottom portion of another pedestal.

24. The pedestal according to any one of claims 18 to 23, wherein
the gas storage container further comprises a battery chargeable by the contactless power supply, and the power supplying portion further comprises a lamp for indicating a state of charge of the battery.

25. A gas storage system, comprising:
one or more gas storage containers according to any one of claims 1 to 17; and
one or more pedestals according to any one of claims 18 to 24.
